Europäisches Patentamt

European Patent Office

Office européen des brevets

(11) Publication number: **0 180 861**
**A2**

(12) # EUROPEAN PATENT APPLICATION

(21) Application number: 85113506.1

(22) Date of filing: 24.10.85

(51) Int. Cl.⁴: **H01S 3/17** , H01S 3/06

(30) Priority: 05.11.84 US 667959

(43) Date of publication of application:
14.05.86 Bulletin 86/20

(84) Designated Contracting States:
DE FR GB NL

(71) Applicant: POLAROID CORPORATION
549 Technology Square
Cambridge, Massachusetts 02139(US)

(72) Inventor: Hicks, John Wilbur, Jr.
312 Howard Street
Northboro, MA 01532(US)

(74) Representative: Koch, Günther, Dipl.-Ing. et al
Postfach 920
D-8000 München 33(DE)

(54) Laterally coupled optical amplifier.

(57) A method and apparatus for amplifying bandwidths of light energy propagated in an optical transmission waveguide in which a length of gain medium optical waveguide is coupled between spaced waveguide end sections defining amplifier input and output ports. The gain medium optical waveguide is preferably defined by an optical fiber core and cladding in which portions are formed of neodymium doped glass. The gain medium fiber is pumped by light energy in a spectrum absorbed by neodymium to provide light energy in wavelength regions including the bandwidth of interest. Noise resulting from the pumping light energy source, as well as spontaneous emission outside of the bandwidth of interest are filtered by dispersive lateral coupling of the gain medium optical fiber to the transmission waveguide.

FIG. 2

## BACKGROUND OF THE INVENTION

This invention relates to amplification of light energy propagated in optical waveguides. More particularly, it concerns a method and apparatus for in-line amplification of a select relatively broad bandwidth of light energy employed, for example, for carrying multiple channels of information in waveguide trunks of an optical communications network.

Optical communications systems currently in operation rely primarily on electro-optical repeater stations for broadband amplifcation of information carrying wavelengths of light energy propagated in the optical waveguides of the system. Such repeater stations are typically located along the length of a trunk line, for example, at points selected so that signal carrying wavelengths of light energy travelling along the trunk are withdrawn at energy levels adequate to maintain signal integrity, reconverted electronically and reintroduced into the trunk at amplified, relatively high energy levels for propagation to the next repeater station. This approach to light energy amplification has been recognized as relatively complicated and expensive and, moreover, as making operation of the entire trunk vulnerable to operation of each repeater station in a sense that the information carrying continuity of the trunk is interrupted by each station.

In-line amplifiers for optical communication systems in which signal carrying wavelengths are amplified by Raman amplification are known. For instance, a series of laser diodes may laterally be coupled to a communications trunk, each laser diode producing a pumping beam selected so that the composite pumping beam at the trunk minimizes the adverse effect of Brillouin backscatter. The use of multiple laser diodes has a further advantage in that the failure of any one diode, though resulting in a lower amplification rate, does not eliminate the whole effect of the amplifier. Moreover, the lateral coupling of the amplifier to the trunk would not, in any event, have an adverse effect on light propagated in the trunk in the event of complete failure of the amplifier other than non-amplification.

U.S. Patent No. 3,894,857 discloses an in-line amplifier for optical fibre transmission lines in which a rod or fiber section containing a gain medium or laser material, such as neodymium, is incorporated in a transmission line either by butt-coupling a discrete length of gain medium rod or fiber into the trunk line or by impregnating sections of the fiber trunk with the gain medium. The section containing the gain medium is excited by an external light source to develop laser oscillation by which the signal carrying light waves in the trunk are amplified. Laser oscillation is presumably achieved as a result of the graded index core of the section including the gain medium.

While the basic approach to in-line amplification using externally pumped fiber sections incorporating a gain medium, as suggested by the U.S. patent, shows promise as a relatively simple solution to the attainment of broadband amplification of signal carrying wavelengths in optical waveguides, several problems are left unresolved. For example, nothing is taught or suggested in respect of matching the wavelengths of light energy emitted by the gain medium to the signal carrying wavelength of the waveguide trunk. In this respect neodymium, which is mentioned as the high gain material, produces spontaneous emission predominately in a band or region of 1.06 microns, but also at .92 micron and at 1.34 micron bands. Where the signal carrying wavelength is at 1.34 microns, a wavelength to which currently available fused silica optical fibers is particularly transparent, limited, if any, amplification is likely to result from the excited neodymium containing section unless provision is made for avoidance of noise represented by other wavelengths of light. Also, pumping light sources available at reasonable costs for exciting a gain medium such as neodymium are in themselves excessively noisy. Thus, where the trunk line includes such a section excited by pumping light, the noise of the pumping light can also adversely effect the signal carrying wavelength of the trunk.

The described developments for in-line amplification of signal carrying wavelengths of optical energy, therefore, while showing promise particularly by comparison to more conventional electro-optical repeaters, leave room for improvement from the standpoint of reliability, cost effectiveness, avoidance of introduction of unwanted noise, and selection of wavelength bands to be amplified.

## BRIEF DESCRIPTION OF THE DRAWINGS

Fig. 1 is a largely schematic view illustrating an optical communications system incorporating the amplifier of the present invention; and

Fig. 2 is an enlarged fragmentary cross-section depicting the manner in which a carrier wavelength is amplified as a result of the present invention.

## SUMMARY OF THE INVENTION

In accordance with the present invention, signal carrying bandwidths of light energy propagated in an optical waveguide such as a trunk line are amplified by passage thereof through a length of optical waveguide coupled to spaced ends of the waveguide and having a portion containing a gain medium pumped by light absorbed by the medium so that the energy of light emitted by the medium is added to the carrier bandwidth. The optical waveguide containing the gain medium, preferably an optical fiber, is preferably pumped by a laser diode through an extension of one end thereof. Also, the coupling of at least the downstream end of the gain medium guide to the waveguide is a wavelength selective, dispersive lateral coupling so that only wavelengths within the carrier bandwidth pass from the gain medium guide back to the trunk. In this way, noise developed as a result either of the pumping light or by the gain medium in the form of wavelengths outside of the carrier bandwidth are isolated in the gain medium fiber and kept from passage into the trunk line.

In an illustrative embodiment, the optical waveguide trunk is interrupted along its length at the point of amplification and closed by a length of gain medium optical fiber. The relatively short length of the gain medium optical fiber, together with the transparency of the gain medium optical fiber to the carrier bandwidth assures continuity of the trunk even in the event the gain medium fiber were not pumped due to failure of the laser diode, for example. As a result, the arrangement is effective as an in-line amplifier.

A principal object of the present invention, therefore, is to provide an improved method and apparatus for broadband amplification of select information bearing bandwidths in an optical waveguide. Other objects and further scope of applicability of the present invention will become apparent from the detailed description taken in conjunction with the accompanying drawings.

## DESCRIPTION OF THE PREFERRED EMBODIMENT

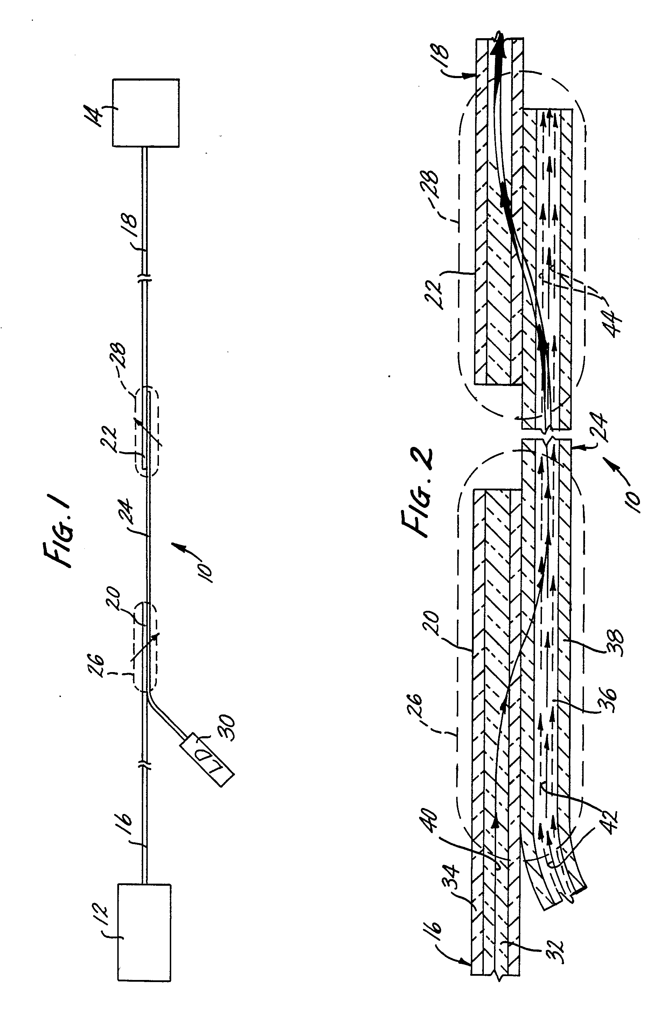

In Fig. 1 an embodiment of the amplifier 10 is shown to be incorporated in an optical communications system schematically represented as having a transmitter 12, a receiver 14 and an optical fiber waveguide trunk represented by two sections 16 and 18, respectively. While the system thus illustrated is representative of only a very basic or elemental optical communications system, it will be understood ·by those skilled in the art that the underlying principles are applicable to a wide variety of optical communications systems.

In optical communications systems of the type represented in Fig. 1, information at the transmitter 12 may be propagated in the optical fiber waveguide trunk 16, 18 as a relatively broad bandwidth of light energy wavelengths, the propagation characteristics of which may be determined by a central wavelength selected for optimum efficiency of transmission in the waveguide trunk. At the present time, optical fiber waveguides using essentially pure fused silica for both the core and cladding with one or the other of the core and cladding doped to provide a higher index of refraction in the core, is considered the most efficient of optical fiber materials in that it is most transparent to light energy wavelengths suited for optical communication, that is, wavelengths slightly in excess of 1 micron. A central wavelength of approximately 1.34 microns is of particular interest from the standpoint of optimizing transmission or minimizing attenuation in fused silica fibers.

While a central wavelength of 1.34 microns may appear narrow in the context of the electromagnetic spectrum, it is relatively broad in the context of the capability for filtering information channels represented by modulated wavelengths as narrow as 0.01 Angstroms. Thus, where reference is made herein and in the appended claims to broad bandwidths of wavelengths or to "broadband" amplification, these terms are used in a relative sense as including a large number of relatively narrow line width information channels. Also in this context, although one receiver 14 is depicted in Fig. 1 of the drawings, an optical communications system in practice might involve hundreds of such receivers.

Because of the distances between a broadband transmitter and one or more receivers of information transmitted along the waveguide trunk 16, 18, there will be attenuation of the signal energy originating in the transmitter 12. One or more amplifiers are used along the trunk to restore the energy level of the signal carrying wavelengths to a useful level, an embodiment of such a broadband amplifier being the amplifier 10 in accordance with the present invention.

In the illustrated embodiment, the amplifier 10 is integrated with the optical fiber waveguide trunk 16, 18 and as such includes an input port defined by an end section 20 of the waveguide 16 and an output port defined by a similar end section 22 of the waveguide 18.· While the end sections 20 and 22 are integral parts of the respective waveguide sections 16 and 18 in the illustrated embodiment, it is contemplated that the sections 20 and 22 may be constituted by discrete lengths of the same optical fiber butt-coupled into the waveguide trunk represented in Fig. 1 by two sections 16 and 18. The input and output sections 20 and 22 are connected to a gain medium optical fiber 24 by evanescent lateral couplings 26 and 28, respectively. One end of the gain medium optical fiber 24, preferably the upstream or input port end thereof, extends to a gain medium pumping light energy source such as a laser diode 30.

As shown in Fig. 2, the optical fiber waveguide sections 16 and 18 each include a central core 32 surrounded by a cladding 34, both the core 32 and the cladding 34 being formed of essentially pure fused silica with either the core 32 or the cladding 34 doped so that the index of refraction in the core 32 is higher than that of the cladding 34. The gain medium optical fiber 24 is similarly formed with a core 36 and a cladding 38, the core 36 again having an index of refraction higher than the cladding 38. In this instance, however, wave carrying portions of the gain medium optical fiber 24 (perferably its core 36) are fabricated or drawn from a host glass doped with an active gain or lasing media which absorbs light energy at one or more absorbing wavelengths and emits light at different emitting wavelength or wavelengths. It is in this context that the term "gain medium optical waveguide" or "gain medium optical fiber" distinguishes the fiber 24 from the fiber constituting the waveguides 16 and 18.

The preferred gain material used in the core 36 of the fiber 24 is neodymium, although other rare earth materials such as terbium or erbium are likewise suitable. The medium is carried in a host glass which might include alkaline earth silicates, but germinate, phosphate and borate glasses are also suitable as the host glass. The concentration of the gain material in the host glass may vary from a lower limit determined by the minimum gain required for a particular application and an upper limit determined by a concentration quenching in the fiber 24. In general, a concentration range between 0.1 and 30 percent by weight is suitable.

The laser diode 30, the source of pumping light energy for the gain medium optical fiber 24, is selected to have a light output at a wavelength within the absorption spectrum of the particular gain medium employed in the fiber 24, such as for example 0.78 - 0.88 microns where the gain medium is neodymium. As light energy from the laser diode 30 enters the core 36 of the fiber 24, the gain medium absorbs photons with concomitant increases in electron energy states. Depending on the active gain material utilized, spontaneous emission can occur across a material-specific emission spectrum. Where neodymium is utilized as the gain medium, spontaneous emission occurs in a bandwidth centered at about 1.06 microns with emission also occurring in the 1.34 micron and other regions of the spectrum. Thus, where signal carrying energy of a wavelength within one of these spontaneous emission regions is introduced into the fiber 24, the introduced wavelength will experience an increase in its energy content, or that is, amplification.

The central wavelength of a signal carrying bandwidth is represented by the continuous arrow line 40 which passes from the waveguide section 20 into the gain medium optical fiber 24 and back to the waveguide section 22. Superimposed on the illustrated core 36 of the fiber 24 in Fig. 2 are spaced solid line arrows 42 representing the pumping wavelength of the laser diode 30 and dashed line arrows 44 representing stray wavelengths generally characterized as unwanted noise. Thus, as the carrier wavelength propagated along the optical fiber waveguide 16 from the transmitter 12 is passed from the end section 20 thereof or input port of the amplifier 10 through the gain medium optical fiber 24, it is amplified by the gain medium of the fiber 24 as pumped by the laser diode 30 and returned to the output port or end section 22 of the waveguide 18 with increased energy.

It is preferred that the lateral coupling 28 connecting the gain medium fiber 24 to the amplifier output port 22 be a frequency selective or dispersive lateral coupling of the type disclosed in U.S. Patent No. 4,342,499. By tuning the dispersive lateral coupling 28 to the central carrier wavelength of the waveguides 16 and 18, only that central wavelength will pass from the fiber 24 to the output 22 of the amplifier. Other wavelengths such as those represented by the pumping wavelength 42 and noise 44 will be isolated from or will not pass to the output section 22 as a result of the tuned dispersive lateral coupling 28. Also in this connection, spontaneous emission in the active gain material of the core 36 such as wavelengths of energy at 1.06 microns in the case of neodymium, may be equally isolated from passage back into the output section 22 where the carrier wavelength propagated along the trunk 16, 18 is 1.34 microns. The lateral coupling 26 at the input port 20 of the amplifier 10 may be equally a dispersive lateral coupling, but since the energy wavelengths passing from the waveguide 16 at this end of the amplifier are relatively free of extraneous wavelengths or unwanted noise, tuning of the coupling 20 is not as critical. On the other hand, it is preferred that the coupling 26 also be a tuned dispersive lateral coupling to prevent backward passage of stray wavelengths from the fiber 24 to the waveguide 16.

It should be understood that the invention, while illustrated in optical fiber construction, may be embodied in both fiber and planar optics. The gain waveguide may be constructed in either fiber or planar form and coupled to fiber segments to form an amplifier package having portions of the fiber segments extended for either lateral or butt coupling to the fiber transmission line, etc. Providing the gain material within the core of the gain waveguide is also preferred; however, the minimum requirement is to provide the gain medium in wave carrying portions of the guide so as to be in an intercepting location to the wave. Thus, the gain material may be carried in portions of the core or in the cladding in addition to or as an alternate to the core. For the preferred single mode fiber, gain material in the cladding would be essentially effective in only a thin annulus of the cladding adjoining the core, for example, in a cladding thickness roughly equal to the core diameter since remaining portions of the cladding carry little of the propagating wave.

Advantageously, providing gain material within the cladding will enhance lateral pumping of the amplifier guide where such is desired as an alternative to end pumping.

In the preferred embodiment, a filtering, dispersive couple is provided at the output end of the amplifier to limit the bandpass at that point to the desired band of the trunk line in order to filter certain spontaneous emission bands of the gain material, such as the dominant 1.06 micron region in the case of neodymium, and also to filter out the pump band as well as other noise. However, it should be noted that alternatively, or preferably in addition to the dispersive couple, absorbing material with strong preferential absorption within the bands to be discouraged may be added to the gain material, for example, chromium or tungsten may be utilized to dampen the 1.06 micron band within the gain material.

Thus, it will be appreciated that as a result of the present invention, a highly effective method and an apparatus for amplification of broadband signal carrying wavelengths in optical fiber waveguide trunks are provided. It is to be noted that although the amplifier represents a physical separation of waveguide trunk sections, the amplifier 10 is effective as an in-line amplifier in the sense that the relatively short section of gain media optical fiber 24 will function to pass light energy from the waveguide section 16 to the waveguide section 18 even in the event the laser diode 30 becomes inoperative. In other words, there would be little loss of the signal carrying wavelength other than the loss resulting from no amplification.

This invention may be practiced or embodied in still other ways without departing from the spirit or essential character thereof. The preferred embodiment described herein is therefore illustrative and not restrictive, the scope of the invention being indicated by the appended claims and all variations which come within the meaning of the claims are intended to be embraced therein.

**Claims**

What is claimed is:

1. An optical communication system having an extended optical transmission waveguide for transmitting optical energy within a given band of wavelengths, comprising an opening in said transmission waveguide providing separated sections thereof, and amplifying means for intercoupling said sections and for amplifying transmitted wavelengths within said given band, said amplifying means including a waveguide segment having gain material therein located for interception of transmitted energy, pumping means for introducing light energy into said segment within the absorption band of said gain material to provide amplification of wavelengths within said given band, and said segment being laterally coupled near its output end as viewed in the direction of pumping energy to at least one of said sections to form therewith a dispersive couple tuned to said given band whereby wavelengths in said given band are passed from one section to the other through said amplifier means and passage of wavelengths outside of said given band is suppressed.

2. The improvement of claim 1 wherein said transmission waveguide and said waveguide segment are optical fibers.

3. The improvement of claim 1 wherein said waveguide segment is coupled at two spaced apart points to said transmission waveguide sections and extends beyond one of the coupling points to said pumping means.

4. The improvement of claim 1 wherein said gain material has a plurality of spontaneous emission bands and said dispersive couple discriminates against at least one of said spontaneous emission bands.

5. The improvement of claim 4 wherein said dispersive couple discriminates against the dominant spontaneous emission band of said gain material.

6. The improvement of claim 4 wherein said gain material is neodymium.

7. An amplifier for select bandwidths of light energy propagated in an optical transmission waveguide, said amplifier comprising:

means defining amplifier input and output ports comprising spaced end sections of said transmission waveguide;

a gain media optical waveguide extending between and coupled to said input and output ports;

means for pumping light energy into said gain media waveguide; and

means defining a tuned dispersive coupling between said gain media waveguide and at least said output port so that substantially only the select bandwidths to be amplified will pass fom said gain media waveguide to said output port.

8. The amplifier of claim 7 wherein said gain media waveguide is an optical fiber segment connected to said end sections by lateral evanescent couplings.

9. The amplifier of claim 8 wherein both said lateral evanescent couplings are tuned dispersive couplings.

10. The amplifier of claim 7 wherein one end of said gain media optical waveguide is extended from one of said couplings to said pumping means.

11. The amplifier of claim 7 wherein said dispersive coupling discriminates against the dominant spontaneous emission band of said gain media waveguide.

12. An amplifier for carrier bandwidths of light energy propagated in an optical fiber waveguide, said amplifier comprising:

an interruption in said waveguide defining a pair of spaced waveguide ends to establish an amplifier input and an amplifier output;

a gain media optical fiber extending between said waveguide ends and being laterally coupled to said amplifier input and to said amplifier output, at least the lateral coupling of said gain media optical fiber to said amplifier output being dispersively tuned to pass only the carrier bandwidth of interest to said waveguide end forming said amplifier output; and

means for pumping light energy into said gain media optical fiber to provide spontaneous emission in a range of wavelengths including said carrier bandwidth;

whereby said spontaneous emission is added to said carrier bandwidths within said gain media optical fiber and passed to said amplifier output.

13. The amplifier of claim 12 wherein the lateral couplings of said gain media fiber to both said input and output are dispersive couples tuned to the carrier bandwidth.

14. The method of amplifying bandwidths of light energy propagated in an optical fiber waveguide, said method comprising the steps of:

interrupting the waveguide to establish spaced first and second fiber end sections;

coupling a length of gain media optical waveguide to said first and second end sections;

pumping light energy into said gain media optical fiber to provide therein light energy in a range of wavelengths including the bandwidth propagated in the waveguide up to said first fiber end section; and

dispersively tuning the coupling of said gain media optical fiber to said second fiber end section so that only bandwidths of light energy passed from said first fiber end section to said gain media waveguide pass from said gain media optical fiber to said second fiber end section.

15. The method of claim 14 wherein said gain media waveguide includes neodymium doped glass, and said pumping step includes introducing light energy to said gain media optical fiber at wavelengths absorbed by neodymium.

16. The method of claim 15 wherein said tuning step comprises tuning the coupling of said gain media waveguide to said second fiber end section to pass only wavelengths approximating 1.34 microns.

FIG.1

FIG.2